Europäisches Patentamt

European Patent Office

Office européen des brevets

(11) Veröffentlichungsnummer: **0 087 489**
**B1**

(19)

(12) # EUROPÄISCHE PATENTSCHRIFT

(45) Veröffentlichungstag der Patentschrift:
19.06.85

(21) Anmeldenummer: 82101579.9

(22) Anmeldetag: **02.03.82**

(51) Int. Cl.⁴: **C 04 B 35/54,** B 01 J 19/08,
C 01 B 31/04

(54) **Verfahren zum Herstellen expandierter Graphitpartikel.**

(43) Veröffentlichungstag der Anmeldung:
07.09.83 Patentblatt 83/36

(45) Bekanntmachung des Hinweises auf die Patenterteilung:
19.06.85 Patentblatt 85/25

(84) Benannte Vertragsstaaten:
DE FR GB IT SE

(56) Entgegenhaltungen:
DE - C - 1 253 130
GB - A - 1 193 227
US - A - 3 885 007

Chemical Abstracts Band 86, Nr. 18, 2. Mai 1977
Columbus, Ohio, USA. M.A. COVINGTON et al.:
"Free-Jet Expansion from Laser-Vaporized Planar
Surfaces" Seite 287, Spalte 1, Abstract Nr. 125885z

(73) Patentinhaber: **SIGRI ELEKTROGRAPHIT GMBH,**
**Werner von Siemens-Strasse 18, D-8901 Meltingen (DE)**

(72) Erfinder: **Hirschvogel, Alfred, Falkenstrasse 16,**
**D-8901 Langweid (DE)**
Erfinder: **Zimmermann, Helmut, Feldstrasse 23,**
**D-8906 Gersthofen (DE)**

## Beschreibung

Die Erfindung betrifft ein Verfahren zum Herstellen expandierter Graphitpartikel, bei welchem Graphiteinlagerungsverbindungen durch die Einwirkung von Wärmeenergie zersetzt werden.

Durch die DE-C-66 804 ist die Herstellung geblähter, eine wurmförmige Strukturierung aufweisender Graphitpartikel durch die thermische Zersetzung einer Graphiteinlagerungsverbindung bekannt, die man durch Einwirkung konzentrierter Schwefelsäure oder eines Gemischs aus Salpetersäure und Schwefelsäure auf Naturgraphitpartikel erhält. Die geblähten — im folgenden als expandierter Graphit bezeichneten — Partikel sind außerordentlich bildsam und lassen sich ohne Zuhilfenahme eines besonderen Binders leicht zu flexiblen Gebilden formen, z. B. zu Folien walzen. Formbarkeit der Graphitpartikel und Festigkeit und Flexibilität der aus den Partikeln hergestellten Gebilde werden wesentlich durch den Grad der Expansion bestimmt, worunter die Ausdehnung der Partikel in Richtung der c-Achse des Graphitkristalls zu verstehen ist. Nach der Lehre der DE-C-1 253 130 sollte der Expansionsgrad wenigstens 80, vorzugsweise wenigstens 200 betragen, damit ohne Binderzusatz durch Zusammenpressen geblähter Partikel hergestellte Formlinge eine ausreichende Festigkeit erhalten. Die Expansion der Graphitpartikel ist offensichtlich darauf zurückzuführen, daß sich beim Erhitzen ausdehende gasförmige Zersetzungsprodukte der Einlagerungsverbindungen die Schichtpakete des Graphitkristalls auseinanderdrücken. Diese Wirkung endet mit dem Ausbruch des zunächst in den einzelnen Körnern eingeschlossenen Gases und der Expansionsgrad ist der während der Aufheizphase austretenden Gasmenge etwa umgekehrt proportional (M. B. Dowell, 12. Conf. on Carbon, 28. Juli bis 1. August 1975, Pittsburgh, Pennsylvania, S. 31). Zur Herstellung von Graphitpartikeln mit einem hohen Expansionsgrad, die sich durch ihre gute Verarbeitbarkeit auszeichnen, muß entsprechend in der Aufheizphase die Größe der ausfließenden Gasmenge beschränkt werden, beispielsweise durch Erzeugung einer Gasmenge innerhalb des Kristalls, die sehr viel größer ist als das durch Kanäle, Poren und dergl. abfließende Gas. Der Erfindung liegt daher die Aufgabe zugrunde, die Gasverluste während der thermischen Zersetzung der Einlagerungsverbindung zu vermindern und expandierte Graphitpartikel mit einem großen Expansionsgrad herzustellen.

Die Aufgabe wird mit einem Verfahren der eingangs genannten Art dadurch gelöst, daß partikelförmige Einlagerungsverbindungen in Schichten mit einer Dicke von höchstens 10 mm ausgebreitet und einer Strahlung ausgesetzt werden, deren Flußdichte wenigstens 500 kW/m² beträgt. Zur Erzeugung der hohen Strahlungsflußdichte eignen sich besonders Strahler aus der Gruppe Infrarotstrahler, Mikrowellen-Strahler und Laser.

Als Ausgangsmaterial für die Herstellung expandierter Graphitpartikel nach der Erfindung eignen sich die bekannten Graphiteinlagerungsverbindungen, die durch Einwirkung eines oder mehrerer Oxidationsmittel allein oder im Gemisch mit anderen chemischen Verbindungen vor allem auf Naturgraphit- und Pyrographitpartikel gebildet werden. Als Oxidationsmittel sind beispielsweise geeignet Salpetersäure, Kaliumchlorat, Kaliumpermanganat, Kaliumdichromat, Chromsäure, Wasserstoffperoxid und Gemische dieser Mittel mit beispielsweise Schwefelsäure. Andere für das erfindungsgemäße Verfahren geeignete Graphiteinlagerungsverbindungen entstehen durch Einwirkung von Halogenen auf Graphitpartikel, besonders von Brom, oder Halogeniden, wie z. B. Eisenchlorid oder Aluminiumchlorid. Die Herstellungsbedingungen sind beispielsweise in der US-A-3 494 382 ausführlich beschrieben, auf die hier verwiesen wird.

Expandierte Graphitpartikel werden nach den bekannten Verfahren durch Erhitzen der Einlagerungsverbindungen hergestellt, wobei die Temperaturen im allgemeinen etwa 600 bis 1000°C und die Erhitzungszeit einige Sekunden betragen. Unter diesen Bedingungen diffundieren nach den dieser Erfindung zugrundeliegenden Erkenntnissen größere Anteile der bei der Wärmebehandlung gebildeten flüchtigen Verbindungen aus dem Kristallgitter und tragen nicht oder nur zu einem Teil zum Aufbau eines hohen Binnendrucks bei. Sehr große, für die weitere Verarbeitung der expandierten Graphitpartikel vorteilhafte Expansionsgrade werden überhaupt nicht oder höchstens zufällig erreicht. Da bei den bekannten Verfahren die Graphiteinlagerungsverbindungen in der Regel durch eine Heizzone bewegt werden, beispielsweise mit Hilfe eines Trägergases, entstehen zudem wegen der unterschiedlichen Verweilzeit der Partikel in der Heizzone, zusätzliche Einbußen der Produktqualität. Das Produkt enthält neben Partikeln mit großem Expansionsgrad einen mehr oder weniger großen Anteil an Partikeln, die nur geringfügig expandiert sind.

Der Erfindung liegt die Erkenntnis zugrunde, daß die genannten Mängel durch Erhitzen der partikelförmigen Einlagerungsverbindungen in einem homogenen Temperaturfeld in einer wesentlich kürzeren Zeitspanne behoben werden können. Unter diesen Bedingungen ist die Bildungsgeschwindigkeit flüchtiger Verbindungen wesentlich größer als die den Verlustanteil bestimmende Diffusionsgeschwindigkeit, so daß sich ein hoher eine große Expansion der Partikel bewirkender Binnendruck aufbaut. Große Aufheizgeschwindigkeiten werden nach der Erfindung durch große Energieflußdichten während der Aufheizperiode erreicht. Die tatsächliche Erhitzungszeit der Einlagerungsverbindung beträgt einige Millisekunden.

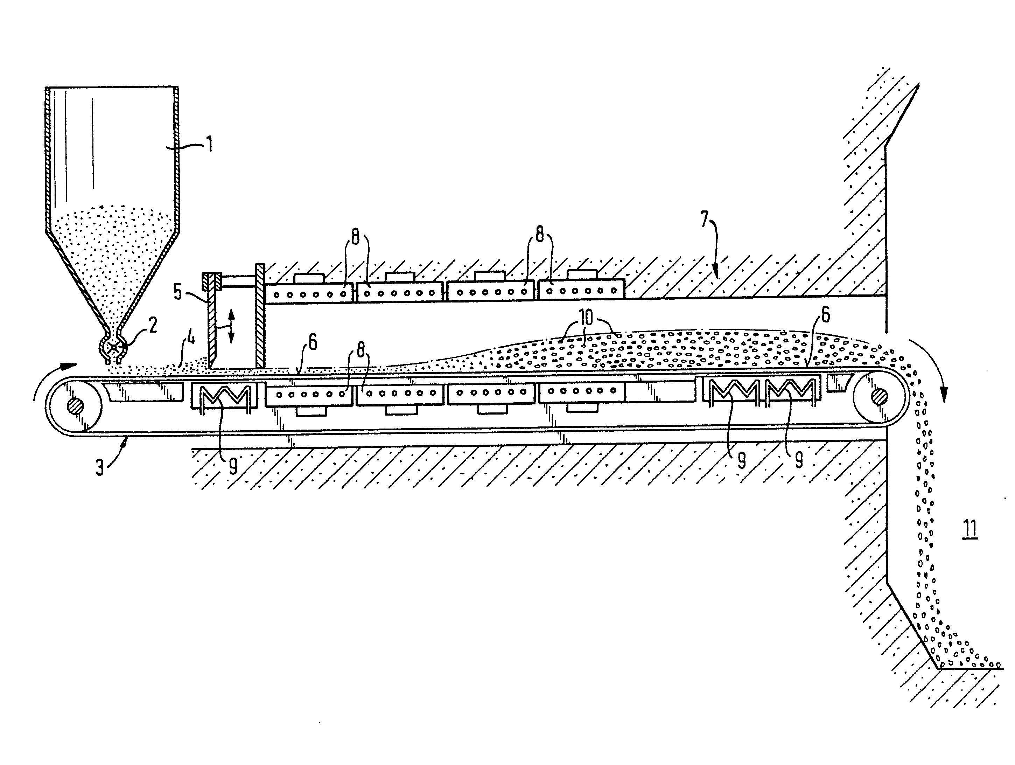

Die Erfindung wird im folgenden anhand von Beispielen und einer Zeichnung erläutert. In der Zeichnung ist 1 ein Vorratsbehälter zur Aufnahme der partikelförmigen Graphiteinlagerungsverbindung, die über die Zellenradschleuse 2 auf ein Transportband 3 aufgegeben wird, dessen Geschwindigkeit in bekannter Weise, beispielsweise durch Drehzahländerung des Antriebsmotors geregelt werden kann. Die Höhe der aufgeschütteten Schicht 4, die maximal 10 mm beträgt, wird durch den Schieber 5 begrenzt. Der Obergurt 6 des Transportbands 3 ist über den größten Teil seiner Erstreckung von einem Mantel 7 umschlossen, in den Gruppen von Strahlern 8 und in Bewegungsrichtung vor und hinter den Strahlern Kühlelemente 9 zur Kühlung des Obergurts eingelassen sind. Die expandierten Graphitpartikel 10 werden in einen Bunker 11 gefördert, der zeichnerisch nicht ausgeführt ist.

### Beispiel 1

Eine etwa 1 mm dicke Schicht aus einer Graphiteinlagerungsverbindung wurde auf einem Transportband aufgeschüttet, wobei das Flächengewicht etwa 100 g/m$^2$ betrug, und mit einer Geschwindigkeit von ca. 0,5 m/s durch eine aus ober- und unterhalb des Obergurts angeordnete, durch Infrarotstrahler gebildete Strahlungszone bewegt. Die Strahlungsflußdichte betrug 800 kW/m$^2$, die Verweilzeit in der Strahlungszone 0,4 s. Der durch Zersetzung der Einlagerungsverbindung gebildete expandierte Graphit hatte einen Expansionsgrad von 500 und eine Schüttdichte von ca. 1,2 g/l. Der spezifische Energieaufwand betrug etwa 0,8 kWh/kg.

### Beispiel 2

Eine 4 mm dicke Schicht aus einer Graphiteinlagerungsverbindung wurde auf einem aus Keramikfasern bestehenden Transportband ausgelegt und durch eine aus Mikrowellenstrahlern gebildete Strahlungszone bewegt. Die Strahlungsflußdichte betrug 500 kW/m$^2$, die Geschwindigkeit des Transportbandes etwa 0,02 m/s. Der gebildete expandierte Graphit hatte einen Expansionsgrad von 400 und eine Schüttdichte von ca. 1,5 g/l. Der spezifische Energiebedarf war 2,1 kWh/kg.

### Beispiel 3

Eine Schicht aus einer Graphiteinlagerungsverbindung mit einem Flächengewicht von ca. 20 g/m$^2$ wurde mit einer Geschwindigkeit von 0,1 m/s durch eine Heizzone mit einem Kohlendioxid-Laser mit einer Leistung von 2 kW bewegt. Der Laserstrahl wird über ein Spiegelsystem zeilenförmig über die Schicht geführt, wobei die Strahlungsflußdichte ca. 6000 kW/m$^2$ beträgt. Der Expansionsgrad war größer als 500, der spezifische Energieaufwand ca. 8,3 kWh/kg.

Die nach den Beispielen hergestellten expandierten Graphitpartikel weisen eine hohe Bildsamkeit auf und lassen sich ohne Verwendung eines Binders, beispielsweise durch Walzwerke, zu flexiblen Folien großer Festigkeit formen.

### Patentansprüche

1. Verfahren zum Herstellen expandierter Graphitpartikel, bei welchem Graphiteinlagerungsverbindungen durch die Einwirkung von Wärmeenergie zersetzt werden, dadurch gekennzeichnet, daß die in Schichten mit einer Dicke von höchstens 10 mm ausgebreiteten partikelförmigen Graphiteinlagerungsverbindungen einer Strahlung ausgesetzt werden, deren Flußdichte wenigstens 500 kW/m$^2$ beträgt.

2. Verfahren nach Patentanspruch 1, dadurch gekennzeichnet, daß zur Erzeugung der Strahlung ein Strahler aus der Gruppe Infrarotstrahler, Mikrowellenstrahler, Laser verwendet wird.

### Claims

1. Process for the production of expanded graphite particles, in which graphite intercalation compounds are decomposed by the effect of thermal energy, characterised in that the particulate graphite intercalation compounds spread out in layers with a thickness of at most 10 mm are exposed to a radiation whose flux density amounts to at least 500 kW/m$^2$.

2. Process according to claim 1, characterised in that, for achievement of the radiation, a radiator from the group of infrared radiators, microwave radiators, lasers, is used.

### Revendications

1. Procédé pour fabriquer des particules de graphite expansé, procédé dans lequel des combinaisons d'insertion de graphite sont désagrégées par l'action de l'énergie calorifique, procédé caractérisé en ce que les combinaisons d'insertion de graphique sous forme de particules étalées en couches d'une épaisseur maximale de 10 mm sont soumises à une irradiation dont la densité de flux est au moins de 500 kW/m$^2$.

2. Procédé selon la revendication 1, caractérisé en ce que pour obtenir l'irradiation, on utilise un émetteur de rayonnement du groupe des émetteurs infra-rouges, des émetteurs micro-ondes, du laser.